(19) Europäisches Patentamt / European Patent Office / Office européen des brevets

(11) **EP 3 095 043 B1**

(12) **EUROPEAN PATENT SPECIFICATION**

(45) Date of publication and mention
of the grant of the patent:
**14.04.2021 Bulletin 2021/15**

(21) Application number: **15737764.9**

(22) Date of filing: **13.01.2015**

(51) Int Cl.:
*G01V 99/00* (2009.01)

(86) International application number:
**PCT/US2015/011201**

(87) International publication number:
**WO 2015/108865 (23.07.2015 Gazette 2015/29)**

(54) **AUTOMATIC CARTESIAN GRIDDING WITH LOGARITHMIC REFINEMENT AT ARBITRARY LOCATIONS**

AUTOMATISCHE KARTESISCHE RASTERUNG MIT LOGARITHMISCHER VERFEINERUNG AN WILLKÜRLICHEN STELLEN

MAILLAGE CARTÉSIEN AUTOMATIQUE AVEC RAFFINEMENT LOGARITHMIQUE À DES EMPLACEMENTS ARBITRAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.01.2014 US 201461927561 P**

(43) Date of publication of application:
**23.11.2016 Bulletin 2016/47**

(60) Divisional application:
**21159883.4**

(73) Proprietor: **ConocoPhillips Company
Houston, Texas 77079 (US)**

(72) Inventor: **NGUYEN, Viet Hoai
Houston, Texas 77007 (US)**

(74) Representative: **Simpson, Paul Christopher et al
ConocoPhillips (U.K.) Limited
20th Floor
Angel Court
London EC2R 7HJ (GB)**

(56) References cited:
| | |
|---|---|
| **US-A1- 2005 273 303** | **US-A1- 2008 312 887** |
| **US-A1- 2009 138 246** | **US-A1- 2009 138 246** |
| **US-A1- 2012 000 669** | **US-A1- 2012 136 636** |
| **US-A1- 2013 073 268** | **US-A1- 2013 073 268** |
| **US-A1- 2013 096 889** | **US-A1- 2013 118 736** |

• **SISSEL SLETTEMARK MUNDAL ET AL:
"Simulation of anisotropic heterogeneous near-well flow using MPFA methods on flexible grids", COMPUTATIONAL GEOSCIENCES, KLUWER ACADEMIC PUBLISHERS, DO, vol. 14, no. 4, 14 November 2009 (2009-11-14), pages 509-525, XP019816091, ISSN: 1573-1499**

**Description**

**FIELD OF THE INVENTION**

The present invention relates generally to computer simulation of flow in subterranean formations. More particularly, but not by way of limitation, embodiments of the present invention include tools and methods for generating a grid with refinements at multiple locations for use in computer reservoir models.

**BACKGROUND OF THE INVENTION**

Reservoir simulation can be used to build a computer model of a field (e.g., model of flow in a porous media) useful for reservoir development and management. The model can be utilized to forecast production behavior of oil and gas fields, optimize reservoir development schemes, as well as evaluate distribution of remaining oil. Numerical methods (e.g., finite volume discretization, finite-difference) are often used during reservoir simulation to solve systems of nonlinear partial differential equations associated with a particular flow model. In such cases, calculation of flow at boundaries between specific cells may be required. Distribution of grid points in space and location of cell boundaries with respect to grid points can significantly affect accuracy of the numerical methods. Thus, grid generation or gridding can be a crucial element for accurate reservoir simulation. Grids enable various heterogeneous geological features to be described as representations in discrete elements, which allows simulations to be performed according to suitable numerical patterns.

Currently, there are limitations to some conventional grid generation tools. Some conventional tools may be considered inflexible and do not automatically change the grid cell size (refine) to maintain discretization accuracy around elements of heterogeneity. Some conventional tools lack scalability that allows for applications in core-scale experiments as well as full field reservoir simulations.

Sissel Slettemark Mundal et at: "Simulation of Anisotropic Heterogeneous NEAR-WELL Flow using MFPA methods on Flexible Grids", Computational Geosciences, Kluwer Academic Publishers, vol 14, no. 4, 14 Nov 2009 , pp 509-525, describes a method of creating a refined non-cartesian grid around a heterogeneity, which refined grid must then be incorporated into the reservoir grid.

**BRIEF SUMMARY OF THE DISCLOSURE**

The present invention relates generally to computer simulation of flow in subterranean formations. More particularly, but not by way of limitation, embodiments of the present invention include tools and methods for generating a grid with refinements at multiple locations for use in computer reservoir models.

The invention provides a computer-implemented method according to claim 1, and a computer readable medium according to claim 9.

**BRIEF DESCRIPTION OF THE DRAWINGS**

A more complete understanding of the present invention and benefits thereof may be acquired by referring to the following description taken in conjunction with the accompanying drawings in which:

FIG. 1A illustrates an example of a grid according to one or more embodiments of the present invention. FIG. 1B illustrates modeled fluid pressure corresponding to FIG. 1A.
FIG. 2 shows comparison of two gridding models as described in Example.
FIG. 3A illustrates a generated grid according to one or more embodiments. FIG. 3B illustrates an oriented grid corresponding to FIG. 3A.

**DETAILED DESCRIPTION**

Reference will now be made in detail to embodiments of the invention, one or more examples of which are illustrated in the accompanying drawings. Each example is provided by way of explanation of the invention, not as a limitation of the invention.

The invention is defined by the appended claims.

The present invention provides tools and methods for generating a grid with logarithmic refinement at multiple arbitrary locations. As used herein, the term "grid" refers to a regular spatial arrangement of points that can be mapped to a Cartesian coordinate system. The related term "gridding" refers to the process of converting irregularly spaced points to a regular spacing by interpolation. As used herein, the term "arbitrary location" refers to any point or any collection of points within the grid, wherein points may represent various subterranean structures such as, but not limited to, wells, natural fractures, artificial fractures (e.g., hydraulic fractures), geological features such as zones of enhanced permeabilities, and fluid contacts.

One of the goals of the present invention is to generalize logarithmic refinement to situations involving multiple arbitrary locations while being able to specify the number of grid cells as input. In some embodiments, logarithmic refinement allows smaller cells to be used around man-made or natural heterogeneity features (e.g., wells, hydraulic fractures, faults), which can be larger away from the wells. One or more embodiments of the present invention may be generalized such that the tools and methods may be applied to one-, two-, or three- dimensional problems. The generated grid can be integrated easily in 3D models. At least one advantage is usefulness in reservoir simulation situations where refinement may be required around multiple subterranean features, which may be regularly or irregularly spaced (e.g., transverse hydraulic fractures, en echelon fractures or faults). Implementation of the present invention can be simple and may be readily integrated into commercially available spreadsheet software programs such as, but not limited to, Excel sold by Microsoft® (Redmond, WA). Other programs and scripting languages may also be used. Other advantages may be apparent from the disclosure herein.

### Generation of Grid

A core routine is often used to create a grid in one dimension. This core routine can be independently applied to 2D and 3D situations to create a multi-dimensional Cartesian grid. The core routine may be used alone or in combination with other gridding schemes such as uniform spacing. Core routine can generate grid-lines located away from refinement spots at radii determined by a multiplicative progression.

Methods of the present invention include: (1) providing input values for length to be discretized ($L$), number of cells require ($n$), size of smallest cells at refine spots ($2*r_o$, small enough for required resolution), and list of refine spot locations; (2) merging any neighboring spots closer than a specified separation (e.g., number of cells > 3 *number of refine spots); (3) calculating progression factor ($a$) by equation 6 (described later); (4) calculating number of cells surrounding each refine spot by rounding off equation 3 (described later); (5) adjusting the number of cells around each refine spot until the required number of cells n is obtained if total number of cells is different from n (go through a priority list); (6) recalculating $a$ using the number of cells after adjustment above (for each refinement spot); (7) calculating cell divisions according to equation 1 (described later); and (8) outputting cell divisions (or grid spacings if required).

Some embodiments provide a computer-implemented method for generating a grid with progressive refinement in one or more spatial dimensions to account for heterogeneity at multiple locations in the one or more spatial dimension, comprising: using, as an input for a computer processor, the total number of grid cells in the one or more spatial dimensions to be gridded; calculating cell divisions via equations derived from geometric or logarithmic series that provide refinement at the multiple locations; and adjusting the cell divisions by an iterative process to obey the total number of grid cells used as input in step 1). Optionally, the method may further comprise: repeating steps 1-8 for a second or third dimension.

In some embodiments, the heterogeneity is natural or man-made. Heterogeneity can be characterized by high permeability features including natural fractures, hydraulic fractures, high permeability faults, or high permeability formations. The heterogeneity may be characterized by boundaries of volumes of stimulated rock volume created by hydraulic fracturing. According to some embodiments, the heterogeneity is introduced by a number of vertical or horizontal wells. Causes of heterogeneity include fluid interfaces selected from the group consisting of: water-oil interface, water-gas interface, oil-gas interface, and any combination thereof. Locations of heterogeneity may be regularly or irregularly spaced.

$$a = \left( \frac{\prod_{i=1}^{k} d_i}{r_0{}^k} \right)^{\frac{2}{n}}$$

Equations used in the method include: a progression factor $a$ in ⟶ wherein n is total number of cells, $d_{1...k}$ are coordinates of the refinement locations, k is number of multiple locations to be refined, and ro is a

$$n_i = \log_a \frac{d_i}{r_o}$$

dimension of the heterogeneity. The total number of cells in ⟶ wherein $i$ is 1 to $k$.

Some embodiments provide a non-transitory computer readable medium storing a program causing a computer to execute gridding process, the gridding process comprising: using as an input the total number of grid cells in the one or more spatial dimensions to be gridded; calculating cell divisions via equations derived from geometric or logarithmic series that provide refinement at the multiple locations; and adjusting the cell divisions by an iterative process to obey the total number of grid cells used as input in step a).

The following example of a certain embodiment of the invention is given. Each example is provided by way of explanation of the invention, one of many embodiments of the invention.

## EXAMPLE

The process of logarithmic gridding may be simplified as a problem of dividing a length of $L$ into $n$ cells with logarithmic refining at $k$ spots whose positions are given.

METHOD

Logarithmic spacing around a point, given the inner-most radius $r_0$:

$$r_i = a \cdot r_{i-1} = a^i \cdot r_0 \text{ where } i = 1 \ldots n \qquad (1)$$

Relationship between the number of spacings and the maximum radius:

$$n = \log_a (r_n/r_0) \qquad (2)$$

For the given problem, logarithmic spacing are required for $k$ segments of half lengths $d_i$, $i = 1 \ldots k$

Number of spacings for each segment:

$$2n_i = 2 \log_a \frac{d_i}{r_0} \text{ for } i = 1 .. k \qquad (3)$$

The total number of spacing is specified:

$$\sum_{i=1}^{k} 2n_i = 2 \sum_{i=1}^{k} \log_a \frac{d_i}{r_0} = n \qquad (4)$$

This equation can be solved for $a$:

$$\frac{n}{2} = \log_a \frac{\prod_{i=1}^{k} d_i}{r_0{}^k} \qquad (5)$$

$$a = \left( \frac{\prod_{i=1}^{k} d_i}{r_0{}^k} \right)^{\frac{2}{n}} \qquad (6)$$

When this value of $a$ is used to calculate the spacing positions, the actual total number of spacings $\sum n_i$ will approximate $n$. Any difference is due to rounding off ($n_i$ are round numbers). This can be corrected by recalculating $a$ for each segment. However, in the end, $a$ for different segments should be similar and hence, the spacing schemes for different segments should be similar. Finally, locations of grid lines around each refinement spot are calculated by equation (1). The method is implemented as a Visual BASIC for Applications (VBA) routine. For a two-dimensional problem, the same routine can be applied to each dimension.

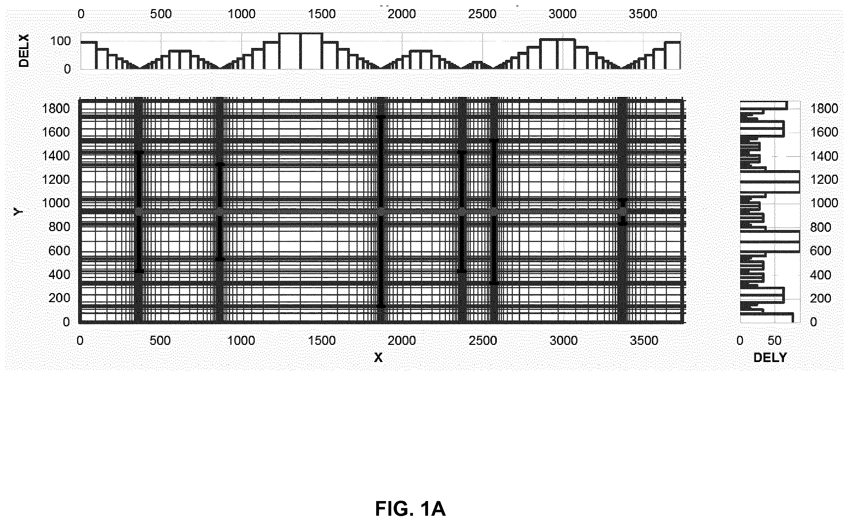

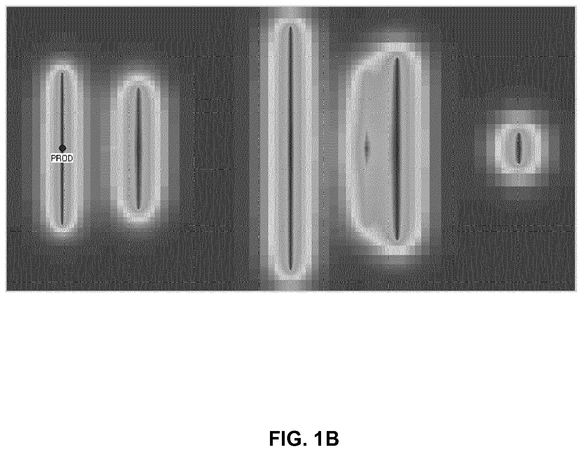

FIG. 1A illustrates an example of an X-Y grid created with refinements around each of multiple hydraulic fractures. As shown in FIG. 1A, rectangular blocks represent cells which are small around the hydraulic fractures (vertical lines) but become larger further away. The hydraulic fractures have different lengths and spacing. Top and side graphs in FIG. 1A show cell sizes in X and Y directions, respectively. The X-Y grid captured the geometry of pressure gradients around each fracture. FIG. 1B illustrates modeled fluid pressure as a result of production through the hydraulic fractures.

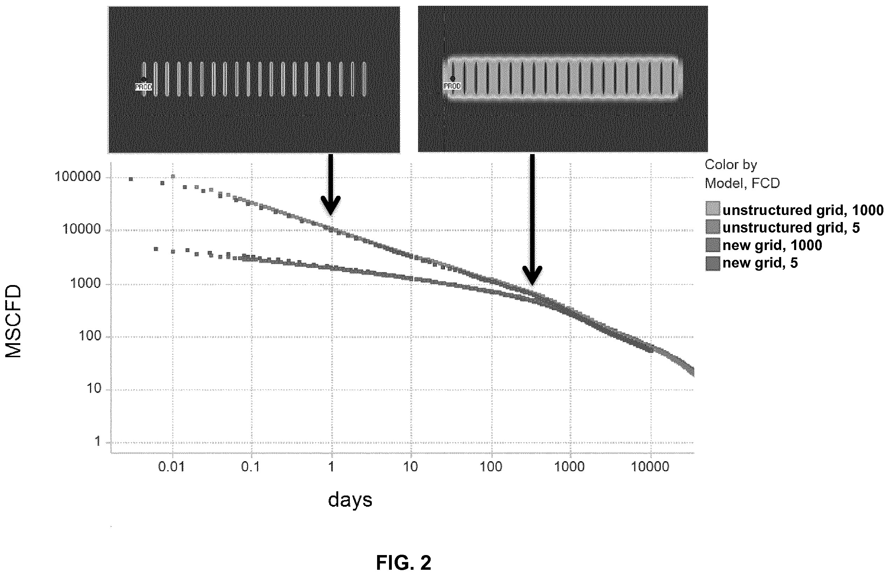

FIG. 2 compares grid refinement method (labeled "new grid") according to one or more embodiments with a non-structured gridding technique (labeled "unstructured grid"). FIG. 2 plots flow (thousands of standard cubic feet per day) as a function of time (days). Two insets show pressure distribution in the Cartesian model during linear flow (left) and boundary-dominated flow (right) periods. As shown, the new grid correlates well with the conventional method but provides increased input flexibility as well as fast computation.

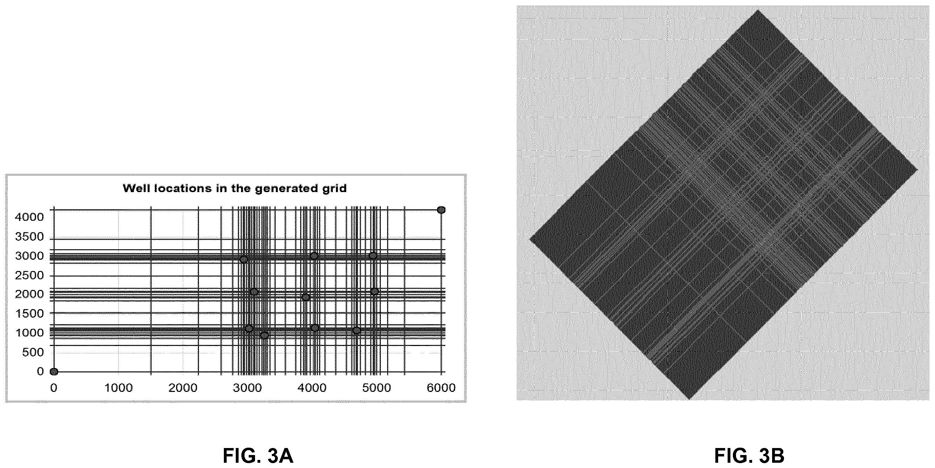

FIG. 3A illustrates another grid generated to provide refinements around well locations. As shown in FIG. 3B, the generated grid can be applied in an optimized orientation. Optimization of orientation can minimize simulation numerical errors by aligning grid with dominant flow directions.

**REFERENCES**

The discussion of any reference is not an admission that it is prior art to the present invention, especially any reference that may have a publication data after the priority date of this application. References are listed again here for convenience

1. M.R. Carlson, (2003) Practical Reservoir Simulation: Using, Assessing, and Developing Results.
2. Khalid Aziz and Antonin Settari (1979) "Petroleum Reservoir Simulation", Applied Science Publishers.

**Claims**

1. A computer-implemented method for generating a single Cartesian grid for use in reservoir modelling with progressive refinement in one or more spatial dimensions to account for heterogeneity at multiple locations in the one or more spatial dimension, the method comprising:

a. using, as an input for a computer processor, the total number of grid cells in the one or more spatial dimensions to be gridded;
b. calculating cell divisions via equations derived from logarithmic series that provide refinement at the multiple locations, wherein the equations include:

the total number of cells is $2 \sum_{i=1}^{k} \log_a \frac{d_i}{r_0}$,

wherein $i$ is 1 to $k$, and where $a$ is a progression factor given by $a = \left( \frac{\prod_{i=1}^{k} d_i}{r_0^k} \right)^{\frac{2}{n}}$ wherein n is a total number of cells, k is a number of multiple locations to be refined, $d_{1...k}$ are coordinates of the refinement locations, and ro is a dimension of the heterogeneity;

c. progressively adjusting the cell divisions by an iterative process to obey the total number of grid cells used as input in step a); and
d. generating, based on the cell divisions in step c), a single Cartesian grid for use in reservoir modelling with progressive refinement in one or more spatial dimensions at multiple locations.

2. The method of claim 1, further comprising:
repeating steps a), b), and c) for a second or third dimension.

3. The method of claim 1, wherein the heterogeneity is natural or man-made.

4. The method of claim 1, wherein the heterogeneity is **characterized by** high permeability features including natural fractures, hydraulic fractures, high permeability faults, or high permeability formations.

5. The method of claim 1, wherein the heterogeneity is **characterized by** boundaries of volumes of stimulated rock volume created by hydraulic fracturing.

6. The method of claim 1, wherein the heterogeneity is introduced by a number of vertical or horizontal wells.

7. The method of claim 1, wherein the heterogeneity is caused by a fluid interface selected from the group consisting of: water-oil interface, water-gas interface, oil-gas interface, and any combination thereof.

8. The method of claim 1, wherein the locations of heterogeneity may be regularly or irregularly spaced.

9. A non-transitory computer readable medium storing a program causing a computer to execute a method as claimed in any preceding claim.

**EP 3 095 043 B1**

**Patentansprüche**

1. Computerimplementiertes Verfahren zum Erzeugen eines einzelnen kartesischen Rasters zur Verwendung bei der Reservoirmodellierung mit fortschreitender Verfeinerung in einer oder mehreren räumlichen Dimensionen, um die Heterogenität an mehreren Stellen in einer oder mehreren räumlichen Dimensionen zu berücksichtigen, wobei das Verfahren umfasst:

   a. Verwenden der Gesamtzahl der Rasterzellen als Eingabe für einen Computerprozessor in der einen oder den mehreren räumlichen Dimensionen, die gerastert werden sollen;
   b. Berechnen der Zellteilung über Gleichungen, die aus logarithmischen Serien abgeleitet sind, die eine Verfeinerung an den mehreren Stellen ermöglichen, wobei die Gleichungen Folgendes einschließen:

   die Gesamtzahl der Zellen beträgt $2 \sum_{i=1}^{k} \log_a \frac{d_i}{r_0}$, wobei $i$ 1 bis $k$ ist und wobei $a$ ein Progressionsfaktor gegeben durch $a = \left( \frac{\prod_{i=1}^{k} d_i}{r_0^{\,k}} \right)^{\frac{2}{n}}$ ist, wobei n eine Gesamtzahl von Zellen ist, k eine Anzahl von mehreren zu verfeinernden Stellen ist, $d_{1...k}$ Koordinaten der Verfeinerungsstellen sind und $r_0$ eine Dimension der Heterogenität ist;
   c. schrittweise Einstellen der Zellteilungen durch einen iterativen Prozess, um der Gesamtzahl der Rasterzellen zu folgen, die als Eingabe in Schritt a) verwendet wurden; und
   d. Erzeugen, basierend auf den Zellteilungen in Schritt c) eines einzelnen kartesischen Rasters zur Verwendung bei der Reservoirmodellierung mit fortschreitender Verfeinerung in einer oder mehreren räumlichen Dimensionen an mehreren Stellen.

2. Verfahren nach Anspruch 1, weiter umfassend: Wiederholen der Schritte a), b) und c) für eine zweite oder dritte Dimension.

3. Verfahren nach Anspruch 1, wobei die Heterogeneität natürlich oder menschengemacht ist.

4. Verfahren nach Anspruch 1, wobei die Heterogenität durch Merkmale hoher Permeabilität gekennzeichnet ist, einschließlich natürlicher Brüche, hydraulischer Brüche, Fehler hoher Permeabilität oder Formationen hoher Permeabilität.

5. Verfahren nach Anspruch 1, wobei die Heterogenität durch Grenzen von Volumina des stimulierten Gesteinsvolumens gekennzeichnet ist, die durch hydraulisches Brechen erzeugt werden.

6. Verfahren nach Anspruch 1, wobei die Heterogenität durch eine Anzahl vertikaler oder horizontaler Vertiefungen eingeführt wird.

7. Verfahren nach Anspruch 1, wobei die Heterogenität durch eine Fluidgrenzfläche verursacht wird, die ausgewählt ist aus der Gruppe, bestehend aus: Wasser-Öl-Grenzfläche, Wasser-Gas-Grenzfläche, Öl-Gas-Grenzfläche und einer beliebigen Kombination davon.

8. Verfahren nach Anspruch 1, wobei die Stellen der Heterogenität regelmäßig oder unregelmäßig beabstandet sein können.

9. Nicht transitorisches computerlesbares Medium, das ein Programm speichert, das einen Computer veranlasst, ein Verfahren nach einem der vorstehenden Ansprüche auszuführen.


**Revendications**

1. Procédé mis en œuvre par ordinateur pour générer une grille cartésienne unique pour une utilisation dans le modelage de réservoir avec un raffinement progressif dans une ou plusieurs dimensions spatiales pour représenter l'hétérogénéité au niveau de multiples emplacements dans les une ou plusieurs dimensions spatiales, le procédé comprenant les étapes consistant à :

a. utiliser, en tant qu'entrée pour un processeur d'ordinateur, le nombre total de cellules de grille dans les une ou plusieurs dimensions spatiales à disposer en grille ;

b. calculer des divisions de cellule par l'intermédiaire d'équations dérivées de séries logarithmiques qui fournissent un raffinement au niveau des emplacements multiples, dans lequel les équations incluent :

le nombre total de cellules est $2\sum_{i=1}^{k}\log_a\frac{d_i}{r_0}$, dans laquelle $i$ est de 1 à $k$, et où $a$ est un facteur de progression donné par $a=\left(\frac{\prod_{i=1}^{k}d_i}{r_0^k}\right)^{\frac{2}{n}}$ dans laquelle n est un nombre total de cellules, k est un nombre d'emplacements multiples à raffiner, $d_{1...k}$ sont des coordonnées des emplacements de raffinement, et $r_0$ est une dimension de l'hétérogénéité ;

c. ajuster progressivement les divisions de cellule par un processus itératif pour se conformer au nombre total de cellules de grille utilisées en tant qu'entrée à l'étape a) ; et

d. générer, sur la base des divisions de cellule à l'étape c), une grille cartésienne unique pour une utilisation dans le modelage de réservoir avec un raffinement progressif dans une ou plusieurs dimensions spatiales au niveau de multiples emplacements.

2. Procédé selon la revendication 1, comprenant en outre l'étape consistant à :
répéter les étapes a), b) et c) pour une deuxième ou une troisième dimension.

3. Procédé selon la revendication 1, dans lequel l'hétérogénéité est naturelle ou artificielle.

4. Procédé selon la revendication 1, dans lequel l'hétérogénéité est **caractérisée par** des caractéristiques de haute perméabilité incluant des fractures naturelles, des fractures hydrauliques, des défauts de haute perméabilité, ou des formations de haute perméabilité.

5. Procédé selon la revendication 1, dans lequel l'hétérogénéité est **caractérisée par** des limites de volumes de volume de roche stimulé créé par une fracturation hydraulique.

6. Procédé selon la revendication 1, dans lequel l'hétérogénéité est introduite par un nombre de puits verticaux ou horizontaux.

7. Procédé selon la revendication 1, dans lequel l'hétérogénéité est provoquée par une interface fluidique sélectionnée à partir du groupe consistant en : une interface eau-huile, une interface eau-gaz, une interface huile-gaz, et toute combinaison de celles-ci.

8. Procédé selon la revendication 1, dans lequel les emplacements d'hétérogénéité peuvent être régulièrement ou irrégulièrement espacés.

9. Support non transitoire lisible par ordinateur stockant un programme amenant un ordinateur à exécuter un procédé selon une quelconque revendication précédente.

FIG. 1A

FIG. 1B

FIG. 2

FIG. 3B

Well locations in the generated grid

FIG. 3A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Simulation of Anisotropic Heterogeneous NEAR-WELL Flow using MFPA methods on Flexible Grids. **SISSEL SLETTEMARK MUNDAL.** Computational Geosciences. Kluwer Academic Publishers, 14 November 2009, vol. 14, 509-525

- **M.R. CARLSON.** *Practical Reservoir Simulation: Using, Assessing, and Developing Results,* 2003
- **KHALID AZIZ ; ANTONIN SETTARI.** Petroleum Reservoir Simulation. Applied Science Publishers, 1979